# EUROPÄISCHE PATENTSCHRIFT

(11) **EP 3 268 656 B1**
(45) Veröffentlichungstag und Bekanntmachung des Hinweises auf die Patenterteilung: **23.01.2019**
(21) Anmeldenummer: 16707387.3
(22) Anmeldetag: 18.02.2016
(51) Int. Cl.: F16M 5/00, F16M 1/08

(54) **ANTRIEBSPAKET**
DRIVE ASSEMBLY
ENSEMBLE D'ENTRAÎNEMENT

(30) Priorität: 13.03.2015 DE 102015003144
(43) Veröffentlichungstag der Anmeldung: 17.01.2018
(73) Patentinhaber: Sew-Eurodrive GmbH & Co. KG, 76646 Bruchsal (DE)
(72) Erfinder: LAUER, Christian, 67378 Zeiskam (DE); BARTON, Peter, 75015 Bretten (DE)
(86) Internationale Anmeldenummer: PCT/EP2016/000274
(87) Internationale Veröffentlichungsnummer: WO 2016/146234

(56) Entgegenhaltungen:
- DE-A1- 3 307 923
- DE-A1-102007 028 446
- DE-A1-102008 058 521
- DE-B3-102006 007 637
- DE-U1- 20 304 111
- GB-A- 2 142 411

## Beschreibung

Die Erfindung betrifft ein Antriebspaket.

Aus der DE 10 2008 058 521 B4 ist eine Baureihe von Antriebspaketen und ein Verfahren zur Herstellung von Antriebspaketen bekannt.

Die DE 33 07 923 A1 zeigt eine Grundplatte für Maschinenaggregate.

In der DE 10 2006 007 637 B3 sind ein Querträger und Baukastensystem für ein kombiniertes Transport- und Aufstellsystem eines Motors und ein Verfahren zum Transport und Aufstellen eines Motors mit diesem Querträger und Baukastensystem gezeigt.

Aus der DE 10 2007 028 446 A1 sind ein Fundamentrahmen oder Motorschwinge für eine Getriebe-Motor-Einheit und ein Verfahren bekannt.

Die GB 2 142 411 A zeigt eine Anordnung zur Montage eines Riemenantriebs.

In der DE 203 04 111 U1 ist ein Gestell zum Tragen einer Pumpeneinheit gezeigt.

Der Erfindung liegt daher die Aufgabe zugrunde, ein Antriebspaket weiterzubilden, wobei der Umweltschutz verbessert werden soll.

Erfindungsgemäß wird die Aufgabe bei dem Antriebspaket nach den in Anspruch 1 angegebenen Merkmalen gelöst.

Wichtige Merkmale der Erfindung bei dem Antriebspaket, aufweisend einen Motor mit einer Rotorwelle, ein Getriebe und eine Tragestruktur, sind, dass
die Tragestruktur ein Tragteil mit einem Getriebeauflageabschnitt und ein Motorauflageteil aufweist, wobei das Tragteil und der Getriebeauflageabschnitt einstückig ausgeführt sind,
wobei der Motor mittels des Motorauflageteils auf der Tragestruktur montiert ist, insbesondere wobei das Motorauflageteil zwischen dem Motor und dem Tragteil angeordnet ist,
wobei das Getriebe auf dem Getriebeauflageabschnitt aufgelagert ist und mittels des Getriebeauflageabschnitts mit der Tragestruktur verbunden ist,
wobei das Tragteil ein Blechteil ist,
wobei das Motorauflageteil ein Blechteil ist,
wobei das Tragteil sich in Rotorwellenachsrichtung weiter als in Querrichtung zur Rotorwellenachsrichtung erstreckt,
wobei das Motorauflageteil sich in der Querrichtung zur Rotorwellenachsrichtung weiter als in Rotorwellenachsrichtung erstreckt.

Von Vorteil ist dabei, dass die aus Blechteilen ausgeführte Tragestruktur kompakt und leicht ausführbar ist. Mittels des quer zur Rotorwellenachsrichtung angeordneten Motorauflageteils ist dabei die Verdrehsteifigkeit, Verwindungssteifigkeit und Schwingungsfestigkeit der Tragestruktur verbessert. Vorteilhafterweise liegt die Resonanzfrequenz der Tragestruktur außerhalb der üblichen Motor-Anregungsfrequenz.

Blechteile zur Herstellung der Tragestruktur sind platzsparend lagerbar und in einem Arbeitsschnitt auf die spezifische Kombination von Motor und Getriebe zuschneidbar. Dabei sind insbesondere die Höhe der Rotorwelle des Motors und der eintreibenden Welle des Getriebes aufeinander anpassbar, indem das Tragteil verschiedene Höhen für das Motorauflageteil und den Getriebeauflageabschnitt aufweist.

Vorteilhafterweise sind das Motorauflageteil und das Trageteil als Stanzteile oder Stanzbiegeteile in einfacher Art und Weise mit hoher Präzision herstellbar. Somit entfällt eine aufwändige Nachbearbeitung der Tragestruktur beispielsweise mittels Schleifen.

Vorteilhafterweise ist das Schnittmuster für die Teile des Trageteils in einfacher Art und Weise übertragbar auf verschiedene Größen von Tragteilen oder verschiedene Blechmaterialien. Dabei ist eine hohe Prozesssicherheit ermöglicht, da das Schnittmuster eineindeutig übertragbar ist.

Vorteilhafterweise sind alle Teile der Tragestruktur aus dem gleichen Blech herstellbar. Somit ist ein Antriebspaket für eine Anwendung bei extremen Außenbedingungen, die ein spezielles Material, insbesondere Stahllegierung, erforderlich machen, vollständig aus ebendiesem Material herstellbar.

Von Vorteil ist dabei weiter, dass der Getriebeauflageabschnitt in einem Fertigungsschritt mit dem Tragteil fertigbar ist. Mittels des gewinkelt ausgeführten Getriebeauflageabschnitts ist die Verdrehsteifigkeit und Schwingungsfestigkeit der Tragestruktur weiter verbessert.

Bei einer vorteilhaften Ausgestaltung weist die Tragestruktur ein Fußteil auf, wobei die Tragestruktur mittels des Fußteils aufgelagert ist, insbesondere auf einer Unterlage, insbesondere Boden, wobei das Motorauflageteil und das Fußteil gleichartig ausgeführt sind, insbesondere identisch. Von Vorteil ist dabei, dass die Tragestruktur mittels des Fußteils kippsicher auf der Unterlage anordenbar ist.

Vorteilhafterweise ist durch die Wiederverwendbarkeit der Motorauflageteile als Fußteile ein Baukasten mit verringerter Teilezahl ermöglicht. Motorauflageteile und Fußteile sind kostengünstig vorhaltbar. Somit ist der Umweltschutz verbessert.

Bei einer vorteilhaften Ausgestaltung erstreckt sich das Fußteil in der Querrichtung zur Rotorwellenachsrichtung weiter als in Rotorwellenachsrichtung. Von Vorteil ist dabei, dass mittels des Fußteils die Verdrehsteifigkeit und Schwingungsfestigkeit der Tragestruktur weiter verbessert ist.

Bei einer vorteilhaften Ausgestaltung weisen das Motorauflageteil und das Fußteil jeweils eine erste Ausnehmung und eine zweite Ausnehmung auf, wobei der Motor mittels eines durch die erste Ausnehmung geführten Befestigungselementes mit der Tragestruktur verbindbar ist, insbesondere wobei die erste Ausnehmung als Langloch ausgeführt ist, insbesondere das sich in Rotorwellenachsrichtung weiter als in der Querrichtung zur Rotorwellenachsrichtung erstreckt, wobei die Tragestruktur mittels eines durch die zweite Ausnehmung geführten Befestigungselementes auf einer Unterlage, insbesondere Boden, montierbar ist. Von Vorteil ist dabei, dass mittels der ersten Ausnehmung der Axialabstand zwischen Motor und Kupplung veränderlich ist und das Kupplungsspiel einstellbar ist.

Vorteilhafterweise sind die Ausnehmungen in einem Arbeitsschritt mit dem Motorauflageteil beziehungsweise dem Fußteil als Stanzteil fertigbar. Somit ist der Fertigungsaufwand reduzierbar und der Umweltschutz ist verbessert.

Bei einer vorteilhaften Ausgestaltung ist/sind das Tragteil und/oder das Motorauflageteil und/oder das Fußteil als Biegeteil ausgeführt, insbesondere als Stanzbiegeteil, insbesondere als Winkelblechteil. Von Vorteil ist dabei, dass Biegeteile eine verbesserte Steifigkeit, insbesondere Verdrehsteifigkeit, aufweisen als ebene Blechteile. Die Blechteile sind dünner ausführbar und Material und Gewicht ist einsparbar. Somit ist der Umweltschutz verbessert.

Bei einer vorteilhaften Ausgestaltung weist das Tragteil zwei Teilabschnitte auf, die in einem nichtverschwindenden Winkel zueinander angeordnet sind, insbesondere wobei dieser Winkel zwischen 90° und 180° beträgt, insbesondere zwischen 135° und 180°, insbesondere zwischen 150° und 170°, wobei zwischen diesen Teilabschnitten ein Kantungsabschnitt angeordnet ist, der sich in Rotorwellenachsrichtung vollständig durch das Tragteil erstreckt. Von Vorteil ist dabei, dass die Verdrehsteifigkeit der Tragestruktur weiter verbessert ist. Das Tragteil ist dünner ausführbar und der Umweltschutz ist verbessert.

Bei einer vorteilhaften Ausgestaltung sind das Motorauflageteil und/oder das Fußteil formschlüssig und stoffschlüssig mit dem Tragteil verbunden, insbesondere schweißverbunden. Von Vorteil ist dabei, dass Schweißnähte zwischen dem Motorauflageteil beziehungsweise dem Fußteil und dem Tragteil kleiner ausführbar sind als bei einer ausschließlich stoffschlüssigen Verbindung. Somit ist Material einsparbar und die Tragestruktur ist leichter ausführbar.

Bei einer vorteilhaften Ausgestaltung weist das Tragteil zumindest eine Positioniernut auf zur Verbindung mit dem Motorauflageteil oder dem Fußteil. Von Vorteil ist dabei, dass das Motorauflageteil beziehungsweise das Fußteil in einfacher Art und Weise positionierbar ist auf dem Tragteil. Fertigungsfehler sind vermeidbar.

Vorteilhafterweise ist die Positioniernut in einem Fertigungsschritt mit dem Trageteil fertigbar, insbesondere schneidbar oder stanzbar.

Bei einer vorteilhaften Ausgestaltung weist das Tragteil einen Trageabschnitt auf, insbesondere der sich von dem Motor zu dem Getriebe erstreckt, wobei der Getriebeauflageabschnitt in einem nichtverschwindenden Winkel zu dem Trageabschnitt angeordnet ist, insbesondere wobei der Getriebeauflageabschnitt im rechten Winkel zu dem Trageabschnitt angeordnet ist. Von Vorteil ist dabei, dass der Getriebeauflageabschnitt in einem Fertigungsschritt mit dem Tragteil fertigbar ist. Mittels des gewinkelt ausgeführten Getriebeauflageabschnitts ist die Verdrehsteifigkeit und Schwingungsfestigkeit der Tragestruktur weiter verbessert.

Bei einer vorteilhaften Ausgestaltung erstreckt sich der Getriebeauflageabschnitt in Rotorwellenachsrichtung weiter als in der Querrichtung zur Rotorwellenachsrichtung. Von Vorteil ist dabei, dass die Verdrehsteifigkeit und Schwingungsfestigkeit der Tragestruktur weiter verbessert sind.

Bei einer vorteilhaften Ausgestaltung weist das Tragteil einen Bodenabschnitt auf, wobei der Bodenabschnitt in einem nicht verschwindenden Winkel zu dem Trageabschnitt angeordnet ist, insbesondere wobei der Winkel zwischen dem Bodenabschnitt und dem Trageabschnitt größer oder gleich 90° ist, insbesondere zwischen 90° und 180°, insbesondere zwischen 90° und 135°, insbesondere zwischen 100° und 120°. Von Vorteil ist dabei, dass Verdrehsteifigkeit und Schwingungsfestigkeit der Tragestruktur weiter verbessert sind.

Bei einer vorteilhaften Ausgestaltung ist der Bodenabschnitt zwischen zwei Trageabschnitten angeordnet, insbesondere wobei das Tragteil einen im Wesentlichen U-förmigen Querschnitt aufweist. Von Vorteil ist dabei, dass das Tragteil zwischen den Schenkeln des U hohl ausführbar ist, somit ist Gewicht einsparbar. Der Umweltschutz ist verbessert.

Bei einer vorteilhaften Ausgestaltung ist eine Drehmomentstütze mittels einer Drehmomentstützplatte mit der Tragestruktur verbunden, wobei die Drehmomentstützplatte formschlüssig mit dem Tragteil verbunden ist, insbesondere verzapft ist, insbesondere formschlüssig und stoffschlüssig verbunden, wobei die Drehmomentstütze lösbar mit der Drehmomentstützplatte verbunden ist, insbesondere mittels einer Schraubverbindung. Von Vorteil ist dabei, dass das Antriebspaket mittels der Drehmomentstütze mit einer Applikation verbindbar ist. Dabei leitet die Drehmomentstütze ein auf das Antriebspaket wirkendes Drehmoment ab.

Vorteilhafterweise ist die Drehmomentstützplatte stoffschlüssig und formschlüssig mit der Tragestruktur verbunden. Somit ist die Widerstandsfähigkeit der Drehmomentstützplatte gegen Querkräfte verbessert, da die formschlüssige Verbindung ein Abreißen der Drehmomentstützplatte von dem Tragteil erschwert.

Bei einer vorteilhaften Ausgestaltung weist die Tragestruktur ein Blechteil auf, das zumindest teilweise zwischen zwei Getriebeauflageabschnitten angeordnet ist, wobei das Blechteil als Biegeteil ausgeführt ist. Von Vorteil ist dabei, dass mittels des Blechteils Verdrehsteifigkeit und Schwingungsfestigkeit der Tragestruktur weiter verbessert sind.

Vorteilhafterweise weist das Blechteil quer zur Rotorwellenachsrichtung verlaufende Kantungsabschnitte auf.

Bei einer vorteilhaften Ausgestaltung ist das Tragteil zweistückig ausgeführt, wobei zwei Hälften des Tragteils stoffschlüssig miteinander verbunden sind, insbesondere schweißverbunden, insbesondere wobei das Tragteil eine lineare Schweißnaht, insbesondere I-Naht, aufweist, insbesondere die sich in Rotorwellenachsrichtung erstreckt. Von Vorteil ist dabei, dass das Tragteil in einfacher Art und Weise biegbar und anschließend verschweißbar ist.

Bei einer vorteilhaften Ausgestaltung ist die Schweißnaht unterbrochen mittels zumindest einer Ausnehmung, insbesondere einer sich in Rotorwellenachsrichtung weiter als in der Querrichtung zur Rotorwellenachsrichtung erstreckenden Ausnehmung. Von Vorteil ist dabei, dass Material einsparbar ist, somit ist das Gewicht der Tragestruktur reduzierbar.

Vorteilhafterweise ist überflüssiges Material beim Pulverbeschichten oder Feuerverzinken mittels der Ausnehmung abführbar, so dass weiteres Material einsparbar ist.

Bei einer vorteilhaften Ausgestaltung sind die zwei Hälften des Tragteils spiegelsymmetrisch zueinander ausgeführt. Von Vorteil ist dabei, dass die zwei Hälften des Tragteils gleichmäßig mit Gewichtskraft und Drehmoment beaufschlagbar sind.

Vorteilhafterweise sind die zwei Hälften mit dem gleichen Stanzwerkzeug herstellbar. Somit sind Werkzeuge einsparbar und der Umweltschutz ist verbessert.

Bei einer vorteilhaften Ausgestaltung weist das Antriebspaket eine Kupplung auf, insbesondere eine Fluidkupplung, wobei die Kupplung die Rotorwelle des Motors und eine eintreibende Welle des Getriebes miteinander verbindet, wobei die Tragestruktur eine Wanne aufweist, die den von der Kupplung in Rotorwellenachsrichtung überdeckten Bereich überdeckt. Von Vorteil ist dabei, dass aus der Kupplung austretendes Fluid mittels der Wanne auffangbar ist und nicht auf die Applikation spritzt oder tropft. Somit ist die Sicherheit verbessert.

Bei einer vorteilhaften Ausgestaltung ist die Wanne stoffschlüssig mit dem Tragteil verbunden, insbesondere schweißverbunden. Von Vorteil ist dabei, dass die Wanne die Verdrehsteifigkeit und Schwingungsfestigkeit der Tragestruktur weiter verbessert.

Bei einer vorteilhaften Ausgestaltung weist das Antriebspaket einen Lüfter auf, wobei der Lüfter in Rotorwellenachsrichtung zwischen der Kupplung und dem Getriebe angeordnet ist, wobei ein Lüfterrad des Lüfters drehfest mit der eintreibenden Welle des Getriebes verbunden ist. Von Vorteil ist dabei, dass das Getriebe kühlbar ist mittels des Lüfters. Dabei ist das Antriebspaket kompakt ausführbar. Ein zusätzlicher Lüftermotor ist einsparbar.

Bei einer vorteilhaften Ausgestaltung weist die Tragestruktur Ausnehmungen auf, insbesondere Transportbohrungen, wobei die Ausnehmungen als gestanzte oder geschnittene Ausnehmungen ausgeführt sind. Von Vorteil ist dabei, dass die Ausnehmungen in einem Fertigungsschritt mit dem Tragteil stanzbar oder schneidbar sind.

Bei einer vorteilhaften Ausgestaltung sind die Ausnehmungen als Transportösen oder zur Aufnahme von Zinken eines Gabelstaplers geeignet ausgeführt. Von Vorteil ist dabei, dass das Antriebspaket zum Transport mittels der Ausnehmungen fixierbar ist. Zusätzliche Transportösen oder nachträglich eingebrachte Ausschnitte sind einsparbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erstes Ausführungsbeispiel eines erfindungsgemäßen Antriebspaketes in Schrägansicht gezeichnet.
Figur 2 zeigt eine Seitenansicht des ersten Ausführungsbeispiels des erfindungsgemäßen Antriebspaketes.
In Figur 3 ist eine Tragestruktur eines zweiten Ausführungsbeispiels des erfindungsgemäßen Antriebspaketes in Schrägansicht dargestellt.
Figur 4 zeigt eine Draufsicht der Tragestruktur des zweiten Ausführungsbeispiels.
In Figur 5 ist eine Seitenansicht der Tragestruktur des zweiten Ausführungsbeispiels gezeichnet.
Figur 6 zeigt ein drittes Ausführungsbeispiel des erfindungsgemäßen Antriebspaketes in Schrägansicht.
In Figur 7 ist eine weitere Tragestruktur des dritten Ausführungsbeispiels des erfindungsgemäßen Antriebspaketes in Schrägansicht dargestellt.
In Figur 8 ist ein Tragteil der Tragestruktur des dritten Ausführungsbeispiels gezeichnet.
Figur 9 zeigt eine Detailansicht von Figur 1.
Figur 10 zeigt eine schematische Ansicht einer Auflagerung des ersten Ausführungsbeispiels des erfindungsgemäßen Antriebspaketes.

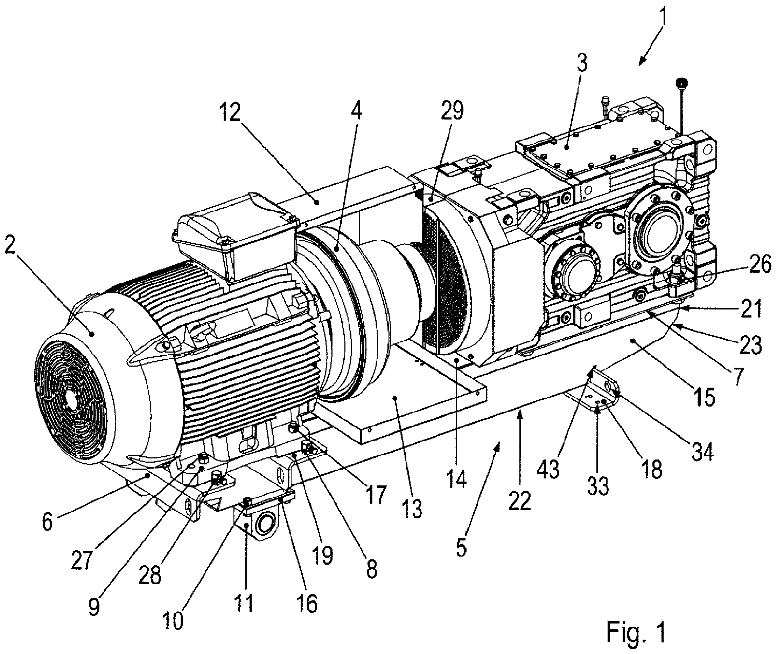

In den Figuren 1, 2, 9 und 10 ist das erste Ausführungsbeispiel des erfindungsgemäßen Antriebspaketes dargestellt.

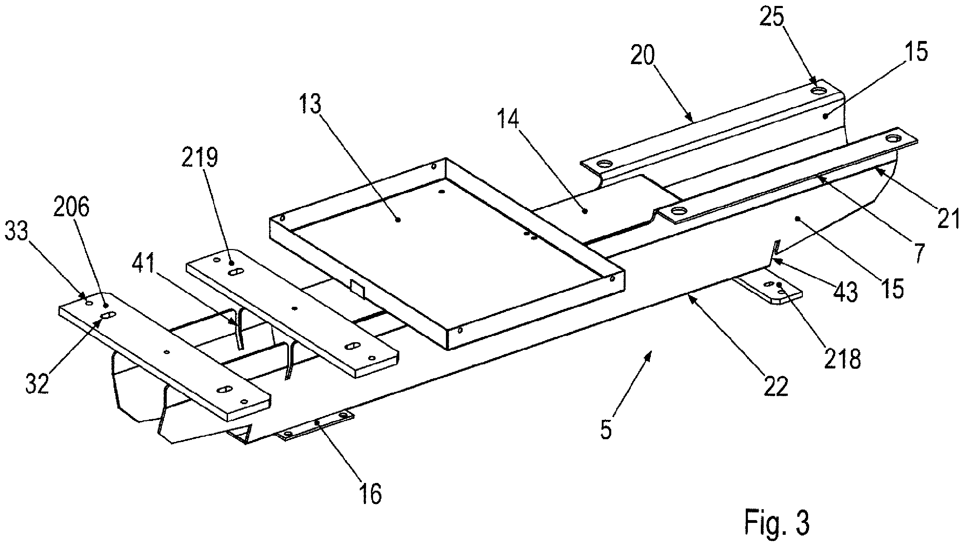

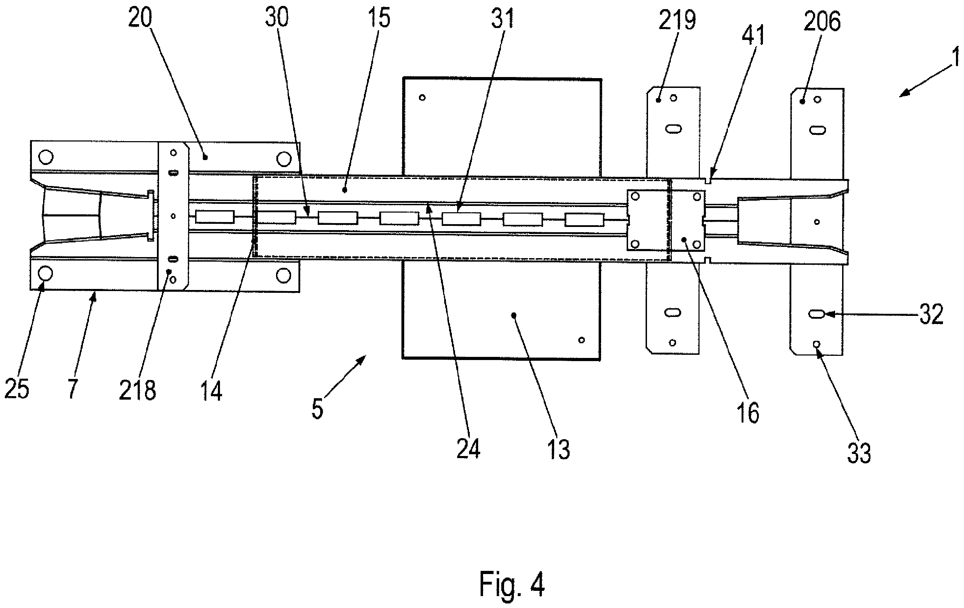

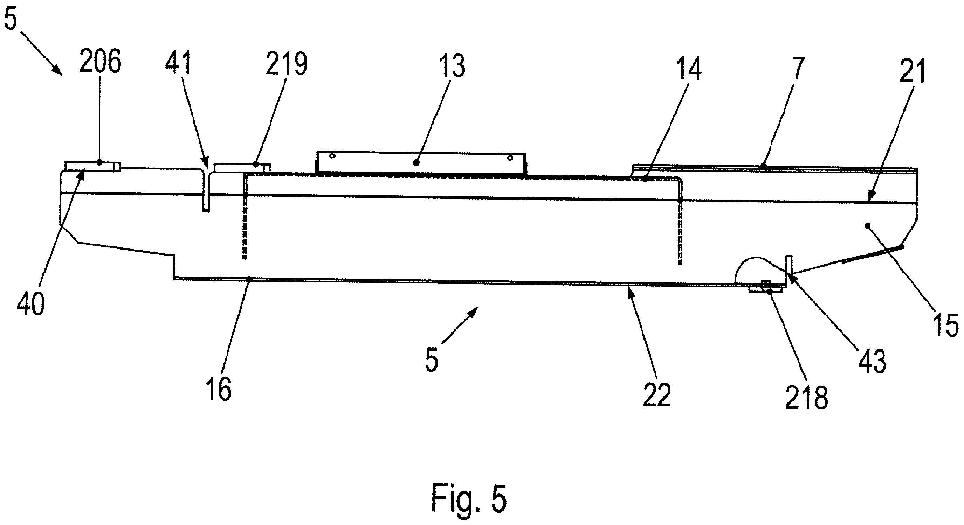

In den Figuren 3, 4 und 5 ist das zweite Ausführungsbeispiel des erfindungsgemäßen Antriebspaketes dargestellt.

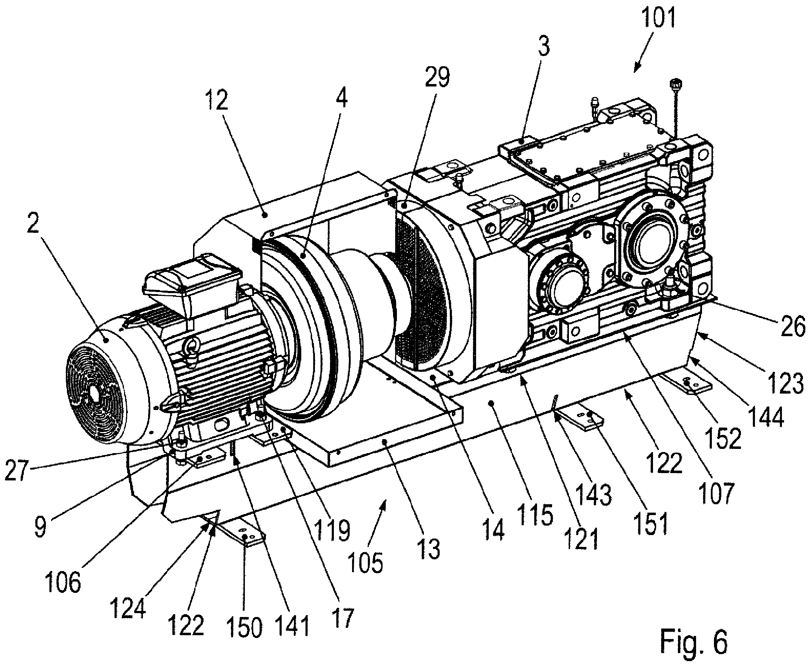

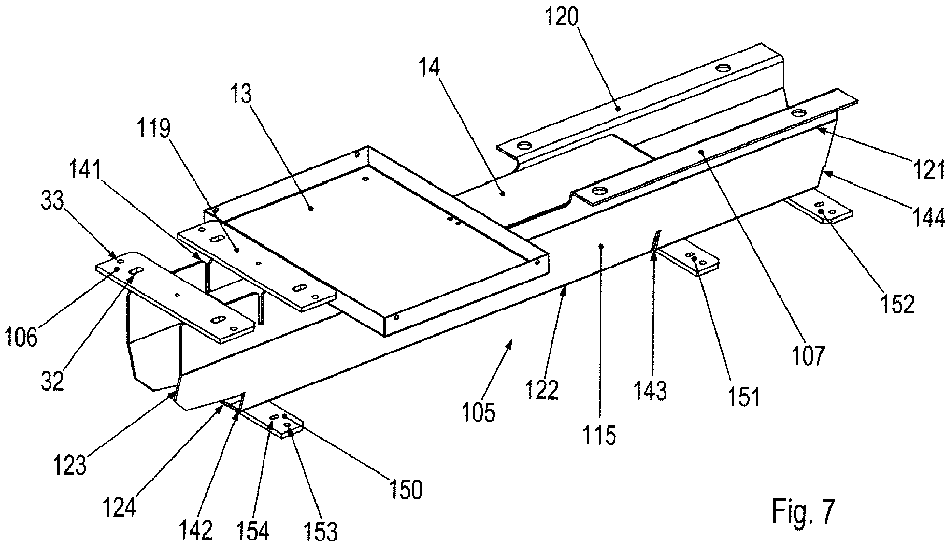

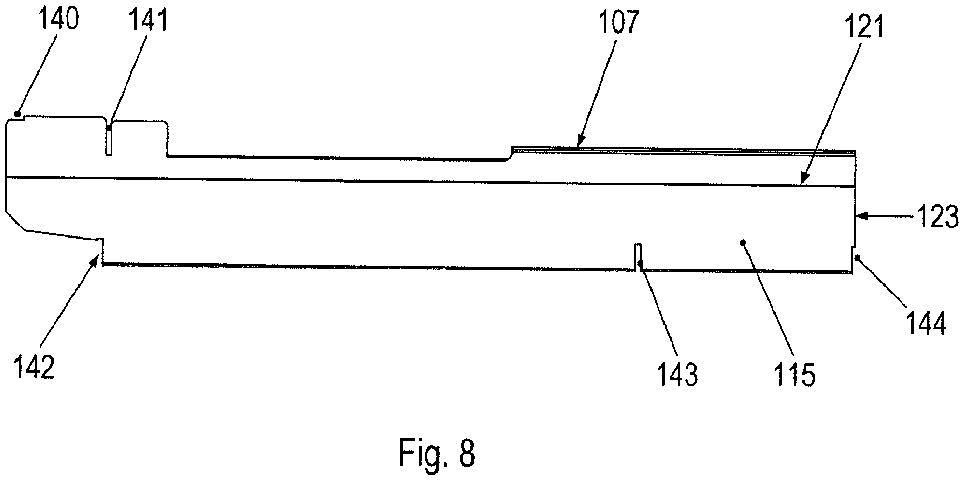

In den Figuren 6, 7 und 8 ist das dritte Ausführungsbeispiel des erfindungsgemäßen Antriebspaketes dargestellt.

Identische Teile im ersten, zweiten und dritten Ausführungsbeispiel sind mit identischen Bezugszeichen bezeichnet.

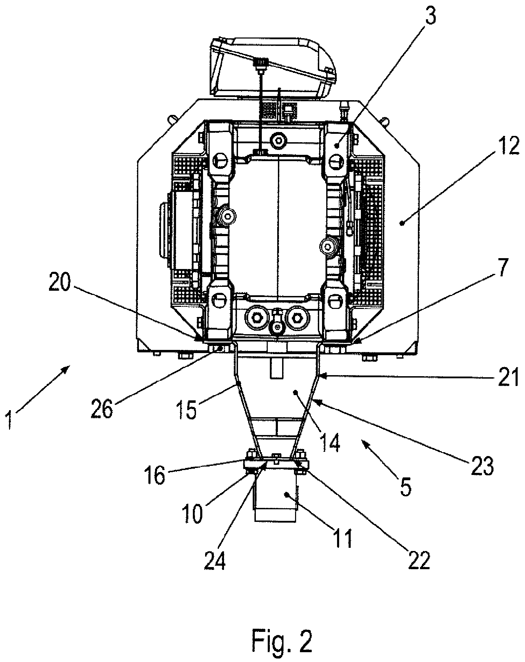

Das in der Figur 1 und 2 dargestellte Antriebspaket 1 weist einen Motor 2, ein Getriebe 3 und eine Tragestruktur 5 auf. Es ist als Motorschwinge ausgeführt.

Der Motor 2 weist eine Rotorwelle auf. Die Rotorwelle definiert eine Rotorwellenachsrichtung. Eine Querrichtung zur Rotorwellenachsrichtung ist definiert als die horizontale Querrichtung, insbesondere die quer zur Gewichtskraft des Antriebspaketes sich erstreckt.

Die Tragestruktur 5 weist ein Tragteil 15 mit zwei Getriebeauflageabschnitten (7, 20) und zwei Motorauflageteile (6, 19) auf.

Auf den Getriebeauflageabschnitten (7, 20) ist das Getriebe 3 montiert. Dazu weisen die Getriebeauflageabschnitte (7, 20) jeweils zumindest eine Ausnehmung 25 auf. Vorzugsweise wird die Ausnehmung 25 in einem Arbeitsgang mit dem Tragteil 15 gestanzt oder lasergeschnitten oder autogen geschnitten oder plasmageschnitten.

Das Getriebe 3 ist mittels eines Befestigungselementes 8, insbesondere Schraubmittel, das durch eine Bohrung im Gehäuse des Getriebes 3 und die Ausnehmung **25** geführt ist, mit dem jeweiligen Getriebeauflageabschnitt (7, 20) lösbar verbunden.

Auf den Motorauflageteilen (6, 19) ist der Motor 2 montiert. Dazu weisen die Motorauflageteile (6, 19) jeweils zumindest eine Ausnehmung 32, vorzugsweise Langloch, auf, das in einem Arbeitsgang mit dem jeweiligen Motorauflageteil (6, 19) gestanzt oder lasergeschnitten wird. Das Langloch erstreckt sich in Rotorwellenachsrichtung weiter als in Querrichtung zur Rotorwellenachsrichtung.

Die Motorauflageteile (6, 19) erstrecken sich in Querrichtung zur Rotorwellenachsrichtung weiter als das Tragteil 15. Vorzugsweise weist jedes Motorauflageteil (6, 19) zwei Ausnehmungen 32 auf, wobei das Tragteil 15 in dieser Querrichtung zur Rotorwellenachsrichtung zwischen den Ausnehmungen 32 angeordnet ist.

Der Motor 2 ist mittels eines Befestigungselementes 17, 27, insbesondere Schraubmittel, das durch eine Bohrung in einem Fußteil 9 des Motors 2 und durch die Ausnehmung 32 geführt ist, mit dem jeweiligen Motorauflageteil (6, 19) lösbar verbunden.

Zwischen dem Fußteil 9 des Motors 2 und den Motorauflageteilen (6, 19) sind Zwischenbleche anordenbar zur Ausrichtung des Motors in vertikaler Richtung. Die Blechstärke der Zwischenbleche beträgt 1 mm bis 5 mm.

Das Tragteil 15 ist als Blechteil ausgeführt. Vorteilhafterweise ist das Tragteil 15 als Stanzbiegeblechteil ausgeführt oder mittels eines Schneidverfahrens, insbesondere mittels eines Laserschneidverfahrens hergestellt. Vorzugsweise ist das Tragteil 15 in einem Arbeitsgang mit Nuten und Ausnehmungen im Tragteil 15 hergestellt.

Das Tragteil 15 weist die Getriebeauflageabschnitte (7, 20), zwei Trageabschnitte 23 und einen Bodenabschnitt 24 auf. Vorzugsweise verbindet der Bodenabschnitt 24 die zwei Trageabschnitte 23. Vorzugsweise weist das Tragteil 15 einen im Wesentlichen U-förmigen Querschnitt auf.

Der Bodenabschnitt 24 ist in einem nichtverschwindenden Winkel zu dem jeweiligen Trageabschnitt 23 angeordnet. Vorzugsweise ist der Winkel zwischen dem Bodenabschnitt 24 und dem jeweiligen Trageabschnitt 23 größer oder gleich 90°, insbesondere zwischen 90° und 180° groß, insbesondere zwischen 90° und 135° groß, insbesondere zwischen 100° und 120° groß. Der Bodenabschnitt 24 ist gekantet relativ zum Trageabschnitt 23 angeordnet. Zwischen dem Bodenabschnitt 24 und dem Trageabschnitt 23 ist ein Kantungsabschnitt 22 angeordnet, der sich in Rotorwellenachsrichtung erstreckt.

Die Trageabschnitte 23 weisen jeweils einen Kantungsabschnitt 21 auf, der sich in Rotorwellenachsrichtung durch das gesamte Tragteil 15 erstreckt. Zwei Teilabschnitte jedes Trageabschnittes 23, die mittels des Kantungsabschnittes 21 miteinander verbunden sind, sind also in einem nichtverschwindenden Winkel zueinander angeordnet. Dieser Winkel beträgt zwischen 90° und 180°, insbesondere zwischen 135° und 180°, insbesondere zwischen 150° und 170°.

Die Höhe der Trageabschnitte 23 ist abhängig von der Größe des Motors 2 und des Getriebes 3 im Axialbereich der Motorauflageteile (6, 19) größer, kleiner oder gleich wie im Axialbereich der Getriebeauflageabschnitte (7, 20). Dabei ist die Höhe der Trageabschnitte 23 bei der Herstellung mittels Stanzens oder Schneidens an jede Kombination von Motor 2 und Getriebe 3 stufenlos anpassbar. Die Blechstärke der Tragestruktur 5 ist an Größe und Gewicht des Motors 2 und Getriebes 3 anpassbar.

Das Tragteil 15 ist zweistückig ausgeführt, wobei die zwei Hälften des Tragteils 15 spiegelsymmetrisch zueinander ausgeführt sind und mittels Schweißens miteinander verbunden sind, insbesondere mittels einer linearen Schweißnaht 30, insbesondere I-Naht. Die zwei Hälften des Tragteils 15 sind mittels eines linienhaften Verbindungsabschnitts miteinander verbunden. Dabei erstreckt sich der Verbindungsabschnitt in Rotorwellenachsrichtung. Vorzugsweise weist das Tragteil 15 entlang des Verbindungsabschnitts der zwei Hälften Ausnehmungen auf, insbesondere wobei die Schweißnaht 30 unterbrochen ist von den Ausnehmungen.

Zwischen den zwei Trageabschnitten 23 des Tragteils 15 ist ein Blechteil 14 angeordnet. Das Blechteil 14 ist als Biegeteil ausgeführt, vorzugsweise weist das Blechteil 14 drei Teilabschnitte auf, die jeweils in einem nichtverschwindenden Winkel, vorzugsweise im rechten Winkel, zueinander angeordnet sind. Die Teilabschnitte spannen jeweils eine Ebene auf, wobei zwei Ebenen die dritte Ebene schneiden. Die Schnittgeraden der Ebenen erstrecken sich in Querrichtung zur Rotorwellenachsrichtung. Das Blechteil 14 ist mit dem Tragteil 15 stoffschlüssig verbunden, insbesondere schweißverbunden.

Die Tragestruktur 5 weist eine Drehmomentstütze 11 auf. Die Drehmomentstütze 11 ist mittels einer Drehmomentstützplatte 16 mit dem Bodenabschnitt 24 des Tragteils 15 verbunden. Vorzugsweise ist die Drehmomentstütze 11 mittels eines Befestigungselementes 10, insbesondere Schraubteils, lösbar mit der Drehmomentstützplatte 16 verbunden.

Die Drehmomentstützplatte 16 ist mit dem Bodenabschnitt 24 des Tragteils 15 formschlüssig mittels zumindest eines Zapfens verbunden und stoffschlüssig mittels einer Schweißverbindung verbunden. Vorzugsweise weist die Drehmomentstützplatte 16 zumindest einen Zapfen auf, der in einer Ausnehmung in dem Bodenabschnitt 24 aufgenommen ist, insbesondere vollständig aufgenommen.

Die Drehmomentstütze 11 weist eine durchgehende Ausnehmung auf, die sich in Querrichtung zur Rotorwellenachsrichtung erstreckt.

Die Drehmomentstütze 11 erstreckt sich in Querrichtung zur Rotorwellenachsrichtung weiter als der Bodenabschnitt 24. Vorzugsweise erstreckt sich die Drehmomentstütze 11 in Querrichtung zur Rotorwellenachsrichtung gleich weit wie der Bodenabschnitt 24. Die Drehmomentstützplatte 16 erstreckt sich in Querrichtung zur Rotorwellenachsrichtung weiter als die Drehmomentstütze 11.

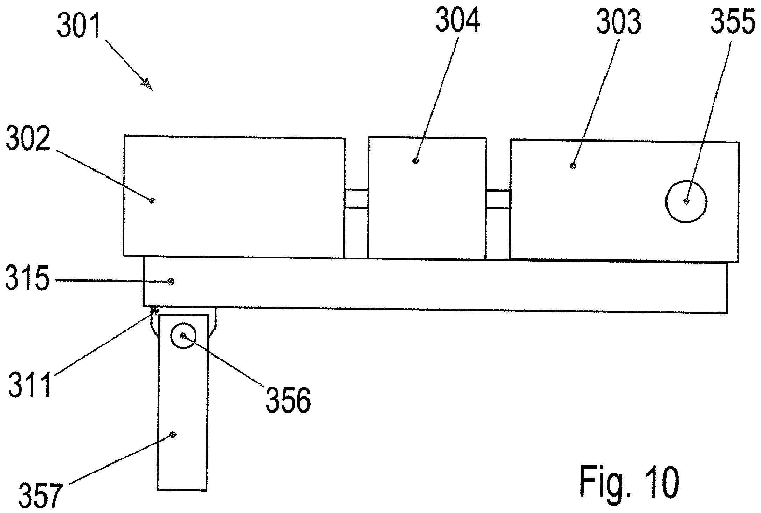

Wie in Figur 10 schematisch dargestellt, ist das Tragteil 315 mittels der Drehmomentstütze 311 auf einem Träger 357, insbesondere einem Stahlträger, aufgelagert. Dazu weist der Träger 357 eine Ausnehmung, insbesondere eine durchgehende Ausnehmung, auf, in die ein Bolzen 356 eingeführt ist. Der Bolzen 356 verbindet die Drehmomentstütze 311 mit dem Träger 357, indem der Bolzen 356 in die Ausnehmung in dem Träger 357 eingeführt ist, insbesondere sich durch diese Ausnehmung hindurch erstreckt. Vorzugsweise ist der Bolzen 356 mit dem Träger 357 und der Drehmomentstütze 311 stoffschlüssig verbunden, insbesondere schweißverbunden.

Vorzugsweise ist der Träger 357 mit einem nicht dargestellten Fundament und/oder einer nicht dargestellten von der Antriebseinheit anzutreibenden Applikation verbunden.

Das erste Ausführungsbeispiel des Antriebspaketes 301 ist mittels einer abtreibenden Welle 355 des Getriebes mit einer nicht dargestellten anzutreibenden Applikation verbunden. Vorzugsweise erstreckt sich die Drehachse der abtreibenden Welle quer zur Rotorwellenachse.

Im Ruhezustand des Antriebspaketes 301 verteilt sich die Gewichtskraft des Antriebspaketes 301 gleichmäßig auf den mittels der Drehmomentstütze 311 mit dem Antriebspaket 301 verbundenen Träger 357 und auf die mittels der abtreibenden Welle 355 mit dem Antriebspaket 301 verbundene Applikation.

Im Betriebszustand des Antriebspaketes 301 ändert sich die Lastverteilung in Abhängigkeit von der Drehrichtung und Drehgeschwindigkeit der abtreibenden Welle 355. Dadurch wirken entweder Druckkräfte oder Zugkräfte auf die Drehmomentstütze 311 oder es stellt sich ein Gleichgewicht zwischen der Gewichtskraft und der aus dem Drehmoment des Antriebspaketes 301 resultierenden Kraft ein.

In einem nicht dargestellten Ausführungsbeispiel weist das Getriebe 303 einen Flansch auf, insbesondere einen die abtreibende Welle 355 in Umfangsrichtung der abtreibenden Welle 355 umgebenden Flansch. Mittels des Flansches ist das Getriebe 303, und somit das Antriebspaket 301, mit einer Applikation verbindbar, so dass die Gewichtskraft des Antriebspaketes 301 sich im Ruhezustand des Antriebspaketes 301 gleichmäßig auf den Träger 357 und die mittels des Flansches mit dem Antriebspaket 301 verbundene Applikation verteilt.

Die Getriebeauflageabschnitte (7, 20) sind einstückig mit dem Tragteil 15 ausgeführt. Der jeweilige Getriebeauflageabschnitt (7, 20) ist in einem nichtverschwindenden Winkel, vorzugsweise einem rechten Winkel, zu dem jeweiligen Trageabschnitt 23 des Tragteils 15 angeordnet. Vorzugsweise sind die Getriebeauflageabschnitte (7, 20) mittels Biegen hergestellt.

Die Motorauflageteile (6, 19) sind als Blechteile, insbesondere Stanzbiegeteile ausgeführt. Vorzugsweise sind die Motorauflageteile (6, 19) als Winkelteile oder Winkelblechteile ausgeführt, insbesondere rechtwinkelige Winkelteile. Vorzugsweise weist jedes Motorauflageteil (6, 19) zwei Motorauflageteilabschnitte auf, die in einem Winkel zwischen 45° und 135°, vorzugsweise im rechten Winkel, zueinander angeordnet sind.

Das Tragteil 15 weist zumindest eine Positioniernut 41 und zumindest eine Ausrichtnut 40 zur Aufnahme der Motorauflageteile (6, 19) auf. Dabei erstreckt sich die Positioniernut 41 tiefer in das Tragteil 15 hinein als die Ausrichtnut 40.

Ein Motorauflageteil 19 ist in der Positioniernut 41 angeordnet. Vorzugsweise ist ein Motorauflageteilabschnitt dieses Motorauflageteils 19 von der Positioniernut 41 aufgenommen, insbesondere vollständig aufgenommen.

Ein Motorauflageteil 6 liegt auf dem Tragteil 15 auf und ist an der Ausrichtnut 40 ausgerichtet. Vorzugsweise berührt ein Seitenabschnitt dieses Motorauflageteils 6 die Ausrichtnut 40.

Die Motorauflageteile (6, 19) sind mit dem Tragteil 15 formschlüssig verbunden mittels der Positioniernut 41 beziehungsweise der Ausrichtnut 40 und stoffschlüssig verbunden, vorzugsweise verschweißt, vorzugsweise mittels einer linearen Schweißnaht, insbesondere I-Naht.

Auf der dem Getriebeauflageabschnitt (7, 20) gegenüberliegenden Seite weist das Tragteil 15 zumindest eine weitere Positioniernut 43 auf. Vorzugsweise grenzt die weitere Positioniernut 43 an den Bodenabschnitt 24 an.

Mittels der weiteren Positioniernut 43 ist ein Transportblechteil 18 positionierbar. Vorzugsweise ist das Transportblechteil 18 baugleich zu dem Motorauflageteil (6, 19) ausgeführt. Das Transportblechteil 18 ist zumindest teilweise in die weitere Positioniernut 43 eingeführt und formschlüssig mit dem Tragteil 15 verbunden mittels der weiteren Positioniernut 43 und kraftschlüssig mit dem Tragteil 15 verbunden, vorzugsweise mittels einer lösbaren Verbindung, insbesondere Schraubverbindung. Das Transportblechteil 18 erstreckt sich in Querrichtung zur Rotorwellenachsrichtung weiter als der Bodenabschnitt 24.

Das Transportblechteil 18 weist eine Ausnehmung 33 auf, mittels der das Antriebspaket beim Transport auf einer Transportvorrichtung, insbesondere Transportpalette, mit der Transportvorrichtung lösbar verbindbar ist. Vorzugsweise ist das Transportblechteil 18 mittels eines durch die Ausnehmung 33 geführten Schraubmittels mit der Transportvorrichtung verbindbar.

Das Transportblechteil 18 weist eine weitere Ausnehmung 34 auf, die sich parallel zur Rotorwellenachsrichtung durch das Transportblechteil 18 hindurch erstreckt. Dabei ist die weitere Ausnehmung 34 quer zur Ausnehmung 33 ausgerichtet. Mittels der weiteren Ausnehmung 34 ist ein Kran, insbesondere Kranhaken, mit dem Antriebspaket verbindbar zum Transport des Antriebspaketes.

Das Transportblechteil 18 erstreckt sich in Querrichtung zur Rotorwellenachsrichtung weiter als das Tragteil 15. Vorzugsweise weist das Transportblechteil 18 zwei Ausnehmungen 33 auf, wobei das Tragteil 15 in Querrichtung zur Rotorwellenachsrichtung zwischen den zwei Ausnehmungen 33 angeordnet ist.

Ein als Motorauflageteil (6, 19) oder Transportblechteil 18 verwendbares Blechteil weist also zwei Ausnehmungen (32, 33) auf, insbesondere wobei eine Ausnehmung als Langloch ausgeführt ist. Vorzugsweise weist das Blechteil zwei Paare von Ausnehmungen (32, 33) auf, wobei das Tragteil in Querrichtung zur Rotorwellenachsrichtung zwischen den Paaren von Ausnehmungen (32, 33) angeordnet ist.

Die Rotorwelle des Motors 2 und eine eintreibende Welle des Getriebes 3 sind mittels einer Kupplung 4 miteinander verbunden. Vorzugsweise ist die Kupplung 4 als Turbokupplung oder Fluidkupplung ausgeführt.

Auf dem Tragteil 15 ist eine Wanne 13 angeordnet, die mit dem Tragteil 15 verbunden, insbesondere schweißverbunden, ist. Die Wanne 13 ist unterhalb der Kupplung 4 angeordnet. Mittels der Wanne 13 ist aus der Kupplung 4 austretendes Fluid auffangbar.

Die Kupplung 4 ist mittels einer Haube 12 abgedeckt. Die Haube 12 fungiert als Berührschutz für die Kupplung 4.

In Rotorwellenachsrichtung zwischen der Kupplung 4 und dem Getriebe 3 ist ein Lüfter 29 angeordnet zur Kühlung des Getriebes. Das Lüfterrad des Lüfters 29 ist drehfest mit der eintreibenden Welle des Getriebes 3 gekoppelt.

Das in den Figuren 3 bis 5 dargestellte zweite Ausführungsbeispiel des Antriebspaketes unterscheidet sich von dem ersten Ausführungsbeispiel dadurch, dass die Motorauflageteile (206, 219) und das Transportblechteil 218 als flache Blechteile ausgeführt sind, also ungewinkelt.

Die Motorauflageteile (206, 219) liegen auf dem Tragteil 15 auf und sind mit diesem stoffschlüssig verbunden, vorzugsweise schweißverbunden. Das Transportblechteil 218 liegt auf dem Tragteil 15 auf und ist lösbar mit dem Tragteil 15 verbunden, vorzugsweise mittels eines Schraubteils.

Die Motorauflageteile (206, 219) und das Transportblechteil 218 weisen jeweils zwei Ausnehmungen (32, 33, 153, 154) auf. Dabei ist eine Ausnehmung 32 zur Montage des Motors 2 geeignet und vorzugsweise als Langloch ausgeführt. Eine Ausnehmung 154 ist zur Verbindung des Antriebspaketes mit einer Transportvorrichtung, insbesondere Transportpalette geeignet.

Das in den Figuren 6 bis 8 dargestellte dritte Ausführungsbeispiel des Antriebspaketes 101 weist anstatt der Drehmomentstütze 11 zumindest zwei Fußteile (150, 151, 152) auf. Es ist als Fundamentrahmen ausgeführt.

Das Antriebspaket 101 weist eine Tragestruktur 105 auf, die ein Tragteil 115 mit zwei Getriebeauflageabschnitten (107, 120) und zwei Motorauflageteilen (6, 19) aufweist.

Das Tragteil 115 ist in vertikaler Richtung zwischen den Motorauflageteilen (6, 19) und den Fußteilen (150, 151, 152) angeordnet. Die Gewichtskraft des Motors 2 wird mittels des Tragteils 115 von den Motorauflageteilen (6, 19) zu den Fußteilen (150, 151, 152) geleitet. Die Fußteile (150, 151, 152) sind gleichartig mit den Motorauflageteilen (6, 19) ausgeführt. Die Fußteile (150, 151, 152) erstrecken sich in Querrichtung zur Rotorwellenachsrichtung weiter als der Bodenabschnitt.

Mittels einer jeweiligen Ausnehmung in den Fußteilen (150, 151, 152) ist die Tragstruktur 5 auf einer Unterlage fixierbar. Dazu ist jeweils ein Schraubmittel durch die jeweilige Ausnehmung geführt und mit der Unterlage schraubverbunden.

Das Tragteil 115 ist als Blechteil ausgeführt. Vorteilhafterweise ist das Tragteil 115 als Stanzbiegeblechteil ausgeführt oder mittels eines Schneidverfahrens, insbesondere mittels eines Laserschneidverfahrens hergestellt. Das Tragteil 115 weist die Getriebeauflageabschnitte (107, 120), zwei Trageabschnitte 123 und einen Bodenabschnitt 124 auf. Vorzugsweise verbindet der Bodenabschnitt 124 die zwei Trageabschnitte 123.

Der Bodenabschnitt 124 ist in einem nichtverschwindenden Winkel zu dem jeweiligen Trageabschnitt 123 angeordnet. Vorzugsweise ist der Winkel zwischen dem Bodenabschnitt 124 und dem jeweiligen Trageabschnitt 123 größer oder gleich 90°, insbesondere zwischen 90° und 180° groß, insbesondere zwischen 90° und 135° groß, insbesondere zwischen 100° und 120° groß. Der Bodenabschnitt 124 ist gekantet relativ zum Trageabschnitt 23 angeordnet. Zwischen dem Bodenabschnitt 124 und dem Trageabschnitt 123 ist ein Kantungsabschnitt 122 angeordnet.

Die Trageabschnitte 123 weisen jeweils einen Kantungsabschnitt 121 auf, der sich in Rotorwellenachsrichtung durch das gesamte Tragteil 115 erstreckt. Zwei Teilabschnitte jedes Trageabschnittes 123, die mittels des Kantungsabschnittes 121 miteinander verbunden sind, sind also in einem nichtverschwindenden Winkel zueinander angeordnet. Dieser Winkel beträgt zwischen 90° und 180°, insbesondere zwischen 135° und 180°, insbesondere zwischen 150° und 170°.

Das Tragteil 115 ist zweistückig ausgeführt, wobei die zwei Hälften des Tragteils 115 spiegelsymmetrisch zueinander ausgeführt sind und mittels Schweißens miteinander verbunden sind, insbesondere mittels einer linearen Schweißnaht, insbesondere I-Naht. Die zwei Hälften des Tragteils 115 sind mittels eines linienhaften Verbindungsabschnitts miteinander verbunden. Dabei erstreckt sich der Verbindungsabschnitt in Rotorwellenachsrichtung. Vorzugsweise weist das Tragteil 115 entlang des Verbindungsabschnitts der zwei Hälften Ausnehmungen auf, insbesondere wobei die Schweißnaht unterbrochen ist von den Ausnehmungen.

Zwischen den zwei Trageabschnitten 123 des Tragteils 115 ist ein Blechteil 114 angeordnet. Das Blechteil 114 ist als Biegeteil ausgeführt, vorzugsweise weist das Blechteil 114 drei Teilabschnitte auf, die jeweils in einem nichtverschwindenden Winkel, vorzugsweise im rechten Winkel, zueinander angeordnet sind. Die Teilabschnitte spannen jeweils eine Ebene auf, wobei zwei Ebenen die dritte Ebene schneiden. Die Schnittgeraden der Ebenen erstrecken sich in Querrichtung zur Rotorwellenachsrichtung.

Die Getriebeauflageabschnitte (107, 120) sind einstückig mit dem Tragteil 115 ausgeführt. Der jeweilige Getriebeauflageabschnitt (107, 120) ist in einem nichtverschwindenden Winkel, vorzugsweise einem rechten Winkel, zu dem jeweiligen Trageabschnitt 123 des Tragteil 115 angeordnet. Vorzugsweise sind die Getriebeauflageabschnitte (107, 120) mittels Biegen hergestellt.

Das Tragteil 115 weist zumindest eine Positioniernut 141 und zumindest eine Ausrichtnut 140 zur Aufnahme der Motorauflageteile (6, 19) auf. Dabei erstreckt sich die Positioniernut 141 tiefer in das Tragteil 115 hinein als die Ausrichtnut 140.

Ein Motorauflageteil 19 ist in der Positioniernut 141 angeordnet. Vorzugsweise ist ein Motorauflageteilabschnitt dieses Motorauflageteils 19 von der Positioniernut 141 aufgenommen, insbesondere vollständig aufgenommen.

Ein Motorauflageteil 6 liegt auf dem Tragteil 115 auf und ist an der Ausrichtnut 140 ausgerichtet. Vorzugsweise berührt ein Seitenabschnitt dieses Motorauflageteils 6 die Ausrichtnut 140.

Die Motorauflageteile (6, 19) sind mit dem Tragteil 115 verschweißt, vorzugsweise mittels einer linearen Schweißnaht, insbesondere I-Naht.

Auf der dem Getriebeauflageabschnitt (107, 120) gegenüberliegenden Seite weist das Tragteil 115 zumindest eine weitere Positioniernut 143 auf. Vorzugsweise grenzt die weitere Positioniernut 143 an den Bodenabschnitt 124 an.

Mittels der Positioniernut 143 ist ein Fußteil 151 positionierbar. Das Fußteil 151 ist zumindest teilweise in die Positioniernut 143 eingeführt und fest mit dem Tragteil 15 verbunden, insbesondere schweißverbunden. Das Fußteil 151 erstreckt sich in Querrichtung zur Rotorwellenachsrichtung weiter als der Bodenabschnitt 124.

Auf der dem Motorauflageteil (6, 19) gegenüberliegenden Seite weist das Tragteil 115 eine Ausrichtnut 142 auf. Vorzugsweise grenzt die Ausrichtnut 142 an den Bodenabschnitt 124 an. Mittels der Ausrichtnut 142 ist ein Fußteil 150 ausrichtbar relativ zum Tragteil 115. Vorzugsweise berührt das Fußteil 150 die Ausrichtnut 142.

Auf der dem Getriebeauflageabschnitt (107, 120) gegenüberliegenden Seite weist das Tragteil 115 eine Ausrichtnut 144 auf. Vorzugsweise grenzt die Ausrichtnut 144 an den Bodenabschnitt 124 an. Mittels der Ausrichtnut 144 ist ein Fußteil 152 ausrichtbar relativ zum Tragteil 115. Vorzugsweise berührt das Fußteil 152 die Ausrichtnut 144.

Bei einem weiteren nicht dargestellten Ausführungsbeispiel weist das Tragteil (15, 115) weitere Ausnehmungen auf, die in einem Arbeitsschritt mit dem Tragteil hergestellt werden. Diese weiteren Ausnehmungen sind beispielsweise als Aufnahmen für Zinken eines Gabelstaplers oder als Transportösen verwendbar.

Bei einem weiteren nicht dargestellten Ausführungsbeispiel weist die Tragestruktur (5, 105) eine korrosionsbeständige Beschichtung auf. Vorzugsweise ist die Tragestruktur (5, 105) feuerverzinkt oder pulverbeschichtet ausgeführt.

Alternativ sind die Fußteile und die Motorauflageteile des dritten Ausführungsbeispiels wie die Motorauflageteile (206, 219) des zweiten Ausführungsbeispiels als flache Blechteile ausgeführt.

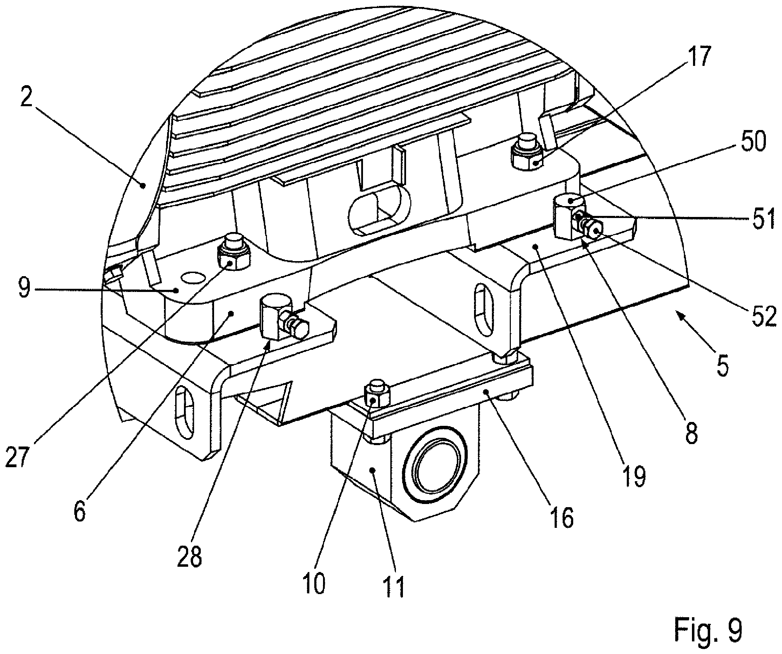

Figur 9 zeigt eine Detailansicht der Figur 1. Ein Ausrichtmittel 8 zum Ausrichten des Motors 2 relativ zur Tragestruktur 5 ist auf dem Motorauflageteil 19 angeordnet. Das Ausrichtmittel 8 weist einen Bolzen 50 auf, der teilweise in der Ausnehmung 33 des Motorauflageteils 19 angeordnet ist.

Der Bolzen weist eine stufenartige Verjüngung auf. Dabei berührt eine Stufe das Motorauflageteil 19. Der verjüngte Bereich des Bolzens 50 ist in die Ausnehmung 33 gesteckt und/oder geklebt. Alternativ ist der Bolzen mit der Ausnehmung 33 schraubverbunden, wobei die Ausnehmung 33 als Gewindebohrung ausgeführt ist.

Alternativ weist der verjüngte Bereich ein Gewinde auf, das vollständig durch die Ausnehmung 33 hindurchgeführt ist. Mittels des Gewindes ist der Bolzen 50 mit einer nicht dargestellten Mutter schraubverbunden.

Alternativ weist der verjüngte Bereich des Bolzens 50 eine durchgehende Bohrung auf, die vollständig durch die Ausnehmung 33 hindurchgeführt ist. In die Bohrung ist ein Splint einführbar, mittels dessen der Bolzen 50 lösbar mit dem Motorauflageteil 19 verbindbar ist.

Alternativ weist der verjüngte Bereich des Bolzens 50 eine umlaufende Nut auf, die vollständig durch die Ausnehmung 33 hindurchgeführt ist. Mittels eines nicht dargestellten Sicherungsringes ist der Bolzen 50 lösbar mit dem Motorauflageteil 19 verbindbar.

Das Ausrichtmittel 28 ist als Metallteil ausgeführt, insbesondere aus rostfreiem Edelstahl, vorzugsweise V2A Edelstahl. Vorzugsweise ist das Ausrichtmittel 28 aus Halbzeugen, wie zum Beispiel aus einem Sechskantteil, einem Vierkantteil oder aus Rundstahl, hergestellt, insbesondere als Drehteil.

Alternativ ist statt des Bolzens 50 ein Flacheisen mit einem angeschweißten Zapfen verwendbar, wobei der Zapfen in die Ausnehmung eingeführt wird und das Flacheisen eine Gewindebohrung für das Schraubteil 52 aufweist.

Der Bolzen 50 weist eine Gewindebohrung auf, mit der ein Schraubteil 52 schraubverbunden ist. Das Schraubteil 52 berührt den Motor 2. Auf dem Schraubteil 52 ist eine Mutter 51 angeordnet. Mittels der Mutter 51 ist das Schraubteil 52 konterbar relativ zum Motor 2.

Der Motor 2 ist mittels zumindest eines Befestigungselementes (17, 27) mit dem Motorauflageteil 19 lösbar verbunden. Dazu weist das Fußteil 9 des Motors zumindest eine Ausnehmung auf. Das Befestigungselement (17, 27) ist durch die Ausnehmung im Fußteil 9 und durch die Ausnehmung 32 geführt.

Mittels des Schraubteils 52 ist der Motor 2 bewegbar in horizontaler Querrichtung zur Rotorwellenachsrichtung.

Mittels des nicht dargestellten Zwischenbleches ist der Motor 2 bewegbar in vertikaler Querrichtung.

Vorzugsweise weist das Antriebspaket 1 zumindest zwei gegenüberliegende Ausrichtmittel 28 auf. Dabei ist der Motor 2 in Querrichtung zur Rotorwellenachsrichtung zwischen den Ausrichtmitteln 28 angeordnet. Somit ist der Motor 2 mittels eines ersten Ausrichtmittels 28 in einer ersten horizontalen Querrichtung zur Rotorwellenachsrichtung drückbar und mittels eines zweiten Ausrichtmittels 28 in einer der ersten horizontalen Querrichtung entgegengesetzten zweiten horizontalen Querrichtung drückbar.

Bei der Montage des Antriebspaketes 1 wird der Motor 2 relativ zur Tragestruktur 5 bewegt, um die Abtriebswelle des Motors 2 und die eintreibende Welle des Getriebes 3 koaxial auszurichten. Dazu wird der Motor 2 mittels zumindest eines Befestigungselementes (17, 27), das durch eine Ausnehmung im Fußabschnitt 9 des Motors 2 und die Ausnehmung 32 im Motorauflageteil 19 geführt wird, fingerfest mit der Tragestruktur 5 verbunden. Das Schraubteil 52 wird durch die Gewindebohrung im Bolzen 50 geschraubt, bis das Schraubteil 52 das Fußteil 9 des Motors 2 berührt. Dann wird das Schraubteil 52 weiter geschraubt, so dass es gegen den Motor 2 drückt und den Motor 2 in horizontaler Querrichtung zur Rotorwellenachsrichtung verschiebt. Sobald der Motor 2 in horizontaler Querrichtung ausgerichtet ist, wird das Schraubteil 52 mittels der Mutter 51 gegen den Bolzen 50 gekontert. Dann wird das Befestigungselement (17, 27) fixiert.

Danach kann das Ausrichtmittel 28 entfernt werden, um für ein weiteres Antriebspaket wiederverwendet zu werden, oder auf der Tragestruktur für eine erneute Ausrichtung verbleiben.

Die Ausnehmung 33 ist mittels eines nicht dargestellten Deckelteils, insbesondere Kunststoffdeckelteils, verschließbar.

### Bezugszeichenliste

- 1: Antriebspaket
- 2: Motor
- 3: Getriebe
- 4: Kupplung
- 5: Tragestruktur
- 6: Motorauflageteil
- 7: Getriebeauflageabschnitt
- 8: Ausrichtmittel
- 9: Fußabschnitt
- 10: Befestigungselement
- 11: Drehmomentstütze
- 12: Haube
- 13: Wanne
- 14: Blechteil
- 15: Tragteil
- 16: Drehmomentstützplatte
- 17: Befestigungselement
- 18: Transportblechteil
- 19: Motorauflageteil
- 20: Getriebeauflageabschnitt
- 21: Kantungsabschnitt
- 22: Kantungsabschnitt
- 23: Trageabschnitt
- 24: Bodenabschnitt
- 25: Ausnehmung
- 26: Befestigungselement
- 27: Befestigungselement
- 28: Ausrichtmittel
- 29: Lüfter
- 30: Schweißnaht
- 31: Ausnehmung
- 32: Ausnehmung, insbesondere Langloch
- 33: Ausnehmung, insbesondere Langloch
- 34: Ausnehmung
- 40: Ausrichtnut
- 41: Positioniernut
- 43: Positioniernut
- 50: Bolzen
- 51: Mutter
- 52: Schraubteil
- 101: Antriebspaket
- 105: Tragestruktur
- 106: Motorauflageteil
- 107: Getriebeauflageabschnitt
- 115: Tragteil
- 119: Motorauflageteil
- 120: Getriebeauflageabschnitt
- 121: Kantungsabschnitt
- 122: Kantungsabschnitt
- 123: Trageabschnitt
- 124: Bodenabschnitt
- 140: Ausrichtnut
- 141: Positioniernut
- 142: Ausrichtnut
- 143: Positioniernut
- 144: Ausrichtnut
- 150: Fußteil
- 151: Fußteil
- 152: Fußteil
- 153: Ausnehmung
- 154: Ausnehmung, insbesondere Langloch
- 206: Motorauflageteil
- 218: Transportblechteil
- 219: Motorauflageteil
- 301: Antriebspaket
- 302: Motor
- 303: Getriebe
- 304: Kupplung
- 311: Drehmomentstütze
- 315: Tragteil
- 355: abtreibende Welle
- 356: Bolzen
- 357: Träger

## Patentansprüche

1. Antriebspaket, aufweisend einen Motor (2) mit einer Rotorwelle, ein Getriebe (3) und eine Tragestruktur (5, 105), wobei die Tragestruktur (5, 105) ein Tragteil (15, 115) mit einem Getriebeauflageabschnitt (7, 20, 107, 120) und ein Motorauflageteil (6, 19, 206, 219) aufweist, wobei das Tragteil (15, 115) und der Getriebeauflageabschnitt (7, 20, 107, 120) einstückig ausgeführt sind,
wobei der Motor (2) mittels des Motorauflageteils (6, 19, 206, 219) auf der Tragestruktur (5, 105) montiert ist, insbesondere wobei das Motorauflageteil (6, 19, 206, 219) zwischen dem Motor (2) und dem Tragteil (15, 115) angeordnet ist,
wobei das Getriebe (3) auf dem Getriebeauflageabschnitt (7, 20, 107, 120) aufgelagert ist und mittels des Getriebeauflageabschnitts (7, 20, 107, 120) mit der Tragestruktur (5, 105) verbunden ist, wobei das Motorauflageteil (6, 19, 206, 219) ein Blechteil ist,
wobei das Tragteil (15, 115) sich in Rotorwellenachsrichtung weiter als in Querrichtung zur Rotorwellenachsrichtung erstreckt,
**dadurch gekennzeichnet, dass** das Tragteil (15,115) ein Blechteil ist,
und dass das Motorauflageteil (6, 19, 206, 219) sich in der Querrichtung zur Rotorwellenachsrichtung weiter als in Rotorwellenachsrichtung erstreckt.

2. Antriebspaket nach Anspruch 1,
**dadurch gekennzeichnet, dass**
die Tragestruktur (105) ein Fußteil (150) aufweist,
wobei die Tragestruktur (105) mittels des Fußteils (150) aufgelagert ist, insbesondere auf einer Unterlage, insbesondere Boden,
wobei das Motorauflageteil (6, 19, 206, 219) und das Fußteil (150) gleichartig ausgeführt sind, insbesondere identisch,
insbesondere wobei das Fußteil (150) sich in der Querrichtung zur Rotorwellenachsrichtung weiter erstreckt als in Rotorwellenachsrichtung.

3. Antriebspaket nach **Anspruch 2**, **dadurch gekennzeichnet, dass**
das Motorauflageteil (6, 19, 206, 219) und das Fußteil (150) jeweils eine erste Ausnehmung (32) und eine zweite Ausnehmung (33) aufweisen,
wobei der Motor (2) mittels eines durch die erste Ausnehmung (32) geführten Befestigungselementes (17) mit der Tragestruktur (5, 105) verbindbar ist, insbesondere wobei die erste Ausnehmung (32) als Langloch ausgeführt ist, insbesondere das sich in Rotorwellenachsrichtung weiter als in der Querrichtung zur Rotorwellenachsrichtung erstreckt,
wobei die Tragestruktur (105) mittels eines durch die zweite Ausnehmung (33) geführten Befestigungselementes auf einer Unterlage, insbesondere Boden, montierbar ist.

4. Antriebspaket nach mindestens einem der Ansprüche **2 bis 3**, **dadurch gekennzeichnet, dass**
das Tragteil (15, 115) und/oder das Motorauflageteil (6, 19) und/oder das Fußteil (150) als Biegeteil ausgeführt sind/ist, insbesondere als Stanzbiegeteil, insbesondere als Winkelblechteil.

5. Antriebspaket nach mindestens einem der vorangegangenen Ansprüche,
**dadurch gekennzeichnet, dass**
das Tragteil (15, 115) zwei Teilabschnitte aufweist, die in einem nichtverschwindenden Winkel zueinander angeordnet sind, insbesondere wobei dieser Winkel zwischen 90° und 180° beträgt, insbesondere zwischen 135° und 180°, insbesondere zwischen 150° und 170°, wobei zwischen diesen Teilabschnitten ein Kantungsabschnitt (21, 121) angeordnet ist, der sich in Rotorwellenachsrichtung vollständig durch das Tragteil (15, 115) erstreckt.

6. Antriebspaket nach mindestens einem der Ansprüche **2 bis 5**, **dadurch gekennzeichnet, dass**
das Motorauflageteil (6, 19) und/oder das Fußteil (150) formschlüssig und stoffschlüssig mit dem Tragteil (15, 115) verbunden sind, insbesondere schweißverbunden,
insbesondere wobei das Tragteil (15, 115) zumindest eine Positioniernut (41, 43, 141, 143) aufweist zur Verbindung mit dem Motorauflageteil (6, 19) oder dem Fußteil (150).

7. Antriebspaket nach mindestens einem der vorangegangenen Ansprüche,
**dadurch gekennzeichnet, dass**
das Tragteil (15, 115) einen Trageabschnitt (23, 123) aufweist, insbesondere der sich von dem Motor (2) zu dem Getriebe (3) erstreckt,
wobei der Getriebeauflageabschnitt (7, 20, 107, 120) in einem nichtverschwindenden Winkel zu dem Trageabschnitt (23, 123) angeordnet ist, insbesondere wobei der Getriebeauflageabschnitt (7, 20, 107, 120) im rechten Winkel zu dem Trageabschnitt (23, 123) angeordnet ist,
insbesondere wobei der Getriebeauflageabschnitt (7, 20, 107, 120) sich in Rotorwellenachsrichtung weiter erstreckt als in der Querrichtung zur Rotorwellenachsrichtung.

8. Antriebspaket nach mindestens einem der vorangegangenen Ansprüche,
**dadurch gekennzeichnet, dass**
das Tragteil (15, 115) einen Bodenabschnitt (24, 124) aufweist,
wobei der Bodenabschnitt (24, 124) in einem nicht verschwindenden Winkel zu dem Trageabschnitt (23, 123) angeordnet ist,
insbesondere wobei der Winkel zwischen dem Bodenabschnitt (24, 124) und dem Trageabschnitt (23, 123) größer oder gleich 90° ist, insbesondere zwischen 90° und 180°, insbesondere zwischen 90° und 135°, insbesondere zwischen 100° und 120°,
insbesondere wobei der Bodenabschnitt (24, 124) zwischen zwei Trageabschnitten (23, 123) angeordnet ist,
insbesondere wobei das Tragteil (15, 115) einen im Wesentlichen U-förmigen Querschnitt aufweist.

9. Antriebspaket nach mindestens einem der vorangegangenen Ansprüche,
**dadurch gekennzeichnet, dass**
eine Drehmomentstütze (11) mittels einer Drehmomentstützplatte (16) mit der Tragestruktur (5) verbunden ist,
wobei die Drehmomentstützplatte (16) formschlüssig mit dem Tragteil (15) verbunden ist, insbesondere verzapft ist, insbesondere formschlüssig und stoffschlüssig verbunden,
wobei die Drehmomentstütze (11) lösbar mit der Drehmomentstützplatte (16) verbunden ist, insbesondere mittels einer Schraubverbindung.

10. Antriebspaket nach mindestens einem der vorangegangenen Ansprüche,
**dadurch gekennzeichnet, dass**
die Tragestruktur (5, 105) ein Blechteil (14, 114) aufweist, das zumindest teilweise zwischen zwei Getriebeauflageabschnitten (7, 20, 107, 120) angeordnet ist,
wobei das Blechteil (14, 114) als Biegeteil ausgeführt ist.

11. Antriebspaket nach mindestens einem der vorangegangenen Ansprüche,
**dadurch gekennzeichnet, dass**
das Tragteil (15, 115) zweistückig ausgeführt ist,
wobei zwei Hälften des Tragteils (15, 115) stoffschlüssig miteinander verbunden sind, insbesondere schweißverbunden,
insbesondere wobei das Tragteil (15, 115) eine lineare Schweißnaht (30), insbesondere I-Naht, aufweist, insbesondere die sich in Rotorwellenachsrichtung erstreckt,
insbesondere wobei die Schweißnaht (30) unterbrochen ist mittels zumindest einer Ausnehmung (31), insbesondere einer sich in Rotorwellenachsrichtung weiter als in der Querrichtung zur Rotorwellenachsrichtung erstreckenden Ausnehmung (31),
insbesondere wobei die zwei Hälften des Tragteils (15, 115) spiegelsymmetrisch zueinander ausgeführt sind.

12. Antriebspaket nach mindestens einem der vorangegangenen Ansprüche,
**dadurch gekennzeichnet, dass**
das Antriebspaket (1, 101) eine Kupplung (4) aufweist, insbesondere eine Fluidkupplung, wobei die Kupplung (4) die Rotorwelle des Motors (2) und eine eintreibende Welle des Getriebes (3) miteinander verbindet,
wobei die Tragestruktur (5, 105) eine Wanne (13) aufweist, die den von der Kupplung (4) in Rotorwellenachsrichtung überdeckten Bereich überdeckt,
insbesondere wobei die Wanne (13) stoffschlüssig mit dem Tragteil (15, 115) verbunden ist, insbesondere schweißverbunden.

13. Antriebspaket nach mindestens einem der vorangegangenen Ansprüche,
**dadurch gekennzeichnet, dass**
das Antriebspaket (1, 101) einen Lüfter (29) aufweist,
wobei der Lüfter (29) in Rotorwellenachsrichtung zwischen der Kupplung (4) und dem Getriebe (3) angeordnet ist,
wobei ein Lüfterrad des Lüfters (29) drehfest mit der eintreibenden Welle des Getriebes (3) verbunden ist.

14. Antriebspaket nach mindestens einem der vorangegangenen Ansprüche,
**dadurch gekennzeichnet, dass**
die Tragestruktur (5, 105) Ausnehmungen aufweist, insbesondere Transportbohrungen,
wobei die Ausnehmungen als gestanzte oder geschnittene Ausnehmungen ausgeführt sind,
insbesondere wobei die Ausnehmungen als Transportösen oder zur Aufnahme von Zinken eines Gabelstaplers geeignet ausgeführt sind.

## Claims

1. A drive package, having a motor (2) with a rotor shaft, a gear unit (3) and a supporting structure (5, 105),
wherein
the supporting structure (5, 105) has a supporting part (15, 115) with a gear unit bearing portion (7, 20, 107, 120), and a motor bearing part (6, 19, 206, 219), wherein the supporting part (15, 115) and the gear unit bearing portion (7, 20, 107, 120) are embodied in one piece,
wherein the motor (2) is mounted on the supporting structure (5, 105) by means of the motor bearing part (6, 19, 206, 219), in particular wherein the motor bearing part (6, 19, 206, 219) is arranged between the motor (2) and the supporting part (15, 115),
wherein the gear unit (3) is borne on the gear unit bearing portion (7, 20, 107, 120) and is connected to the supporting structure (5, 105) by means of the gear unit bearing portion (7, 20, 107, 120),
wherein the motor bearing part (6, 19, 206, 219) is a sheet-metal part,
wherein the supporting part (15, 115) extends further in the axial rotor shaft direction than in the transverse direction to the axial rotor shaft direction,
**characterised in that** the supporting part (15, 115) is a sheet-metal part,
and **in that**
the motor bearing part (6, 19, 206, 219) extends further in the transverse direction to the axial rotor shaft direction than in the axial rotor shaft direction.

2. A drive package according to Claim 1,
**characterised in that**
the supporting structure (105) has a foot part (150),
wherein the supporting structure (105) is borne by means of the foot part (150), in particular on a base, in particular floor,
wherein the motor bearing part (6, 19, 206, 219) and the foot part (150) are embodied similarly, in particular identically,
in particular wherein the foot part (150) extends further in the transverse direction to the axial rotor shaft direction than in the axial rotor shaft direction.

3. A drive package according to Claim 2,
**characterised in that**
the motor bearing part (6, 19, 206, 219) and the foot part (150) in each case have a first cutout (32) and a second cutout (33),
wherein the motor (2) can be connected to the supporting structure (5, 105) by means of a fastening element (17) which is passed through the first cutout (32), in particular wherein the first cutout (32) is embodied as an elongate hole, in particular which extends further in the axial rotor shaft direction than in the transverse direction to the axial rotor shaft direction,
wherein the supporting structure (105) can be mounted on a base, in particular floor, by means of a fastening element which is passed through the second cutout (33).

4. A drive package according to at least one of Claims 2 to 3,
**characterised in that**
the supporting part (15, 115) and/or the motor bearing part (6, 19) and/or the foot part (150) are/is embodied as (a) bent part(s), in particular as (a) stamped and bent part(s), in particular as (an) angled bent part(s).

5. A drive package according to at least one of the preceding claims,
**characterised in that**
the supporting part (15, 115) has two partial portions which are arranged at a non-vanishing angle to each other, in particular wherein this angle is between 90° and 180°, in particular between 135° and 180°, in particular between 150° and 170°,
wherein an edging portion (21, 121) is arranged between these partial portions, which edging portion extends completely through the supporting part (15, 115) in the axial rotor shaft direction.

6. A drive package according to at least one of Claims 2 to 5,
**characterised in that**
the motor bearing part (6, 19) and/or the foot part (150) is/are connected to the supporting part (15, 115) in positive manner and by a material-formed bond, in particular connected by welding,
in particular wherein the supporting part (15, 115) has at least one positioning groove (41, 43, 141, 143) for connecting to the motor bearing part (6, 19) or the foot part (150).

7. A drive package according to at least one of the preceding claims,
**characterised in that**
the supporting part (15, 115) has a supporting portion (23, 123), in particular which extends from the motor (2) to the gear unit (3),
wherein the gear unit bearing portion (7, 20, 107, 120) is arranged at a non-vanishing angle to the supporting portion (23, 123), in particular wherein the gear unit bearing portion (7, 20, 107, 120) is arranged at a right-angle to the supporting portion (23, 123),
in particular wherein the gear unit bearing portion (7, 20, 107, 120) extends further in the axial rotor shaft direction than in the transverse direction to the axial rotor shaft direction.

8. A drive package according to at least one of the preceding claims,
**characterised in that**
the supporting part (15, 115) has a base portion (24, 124),
wherein the base portion (24, 124) is arranged at a non-vanishing angle to the supporting portion (23, 123),
in particular wherein the angle between the base portion (24, 124) and the supporting portion (23, 123) is greater than or equal to 90°, in particular between 90° and 180°, in particular between 90° and 135°, in particular between 100° and 120°,
in particular wherein the base portion (24, 124) is arranged between two supporting portions (23, 123),
in particular wherein the supporting part (15, 115) has a substantially U-shaped cross-section.

9. A drive package according to at least one of the preceding claims,
**characterised in that**
a torque support (11) is connected to the supporting structure (5) by means of a torque support plate (16),
wherein the torque support plate (16) is connected in positive manner, in particular is mortised, in particular connected in positive manner and by a material-formed bond, to the supporting part (15),
wherein the torque support (11) is connected detachably to the torque support plate (16), in particular by means of a screw connection.

10. A drive package according to at least one of the preceding claims,
**characterised in that**
the supporting structure (5, 105) has a sheet-metal part (14, 114) which is arranged at least partially between two gear unit bearing portions (7, 20, 107, 120),
wherein the sheet-metal part (14, 114) is embodied as a bent part.

11. A drive package according to at least one of the preceding claims,
**characterised in that**
the supporting part (15, 115) is embodied in two pieces,
wherein two halves of the supporting part (15, 115) are connected together by a material-formed bond, in particular connected by welding,
in particular wherein the supporting part (15, 115) has a linear weld seam (30), in particular square butt weld, in particular which extends in the axial rotor shaft direction, in particular wherein the weld seam (30) is interrupted by means of at least one cutout (31), in particular a cutout (31) which extends further in the axial rotor shaft direction than in the transverse direction to the axial rotor shaft direction,
in particular wherein the two halves of the supporting part (15, 115) are embodied mirror-symmetrically to each other.

12. A drive package according to at least one of the preceding claims,
**characterised in that**
the drive package (1, 101) has a coupling (4), in particular a fluid coupling,
wherein the coupling (4) connects the rotor shaft of the motor (2) and an input shaft of the gear unit (3) together,
wherein the supporting structure (5, 105) has a trough (13) which covers the region covered by the coupling (4) in the axial rotor shaft direction,
in particular wherein the trough (13) is connected to the supporting part (15, 115) by a material-formed bond, in particular connected by welding.

13. A drive package according to at least one of the preceding claims,
**characterised in that**
the drive package (1, 101) has a fan (29),
wherein the fan (29) is arranged in the axial rotor shaft direction between the coupling (4) and the gear unit (3),
wherein a fan impeller of the fan (29) is connected non-rotatably to the input shaft of the gear unit (3).

14. A drive package according to at least one of the preceding claims,
**characterised in that**
the supporting structure (5, 105) has cutouts, in particular transport bores,
wherein the cutouts are embodied as stamped or cut cutouts,
in particular wherein the cutouts are embodied as lifting eyes or as suitable for receiving prongs of a fork-lift truck.

## Revendications

1. Ensemble d'entraînement, présentant un moteur (2) doté d'un arbre de rotor, une transmission (3) et une structure porteuse (5, 105),
sachant que la structure porteuse (5, 105) présente un élément porteur (15, 115) doté d'une partie (7, 20, 107, 120) de support de transmission et un élément (6, 19, 206, 219) de support de moteur, sachant que l'élément porteur (15, 115) et la partie (7, 20, 107, 120) de support de transmission sont réalisés d'une seule pièce,
sachant que le moteur (2) est monté sur la structure porteuse (5, 105) au moyen de l'élément (6, 19, 206, 219) de support de moteur, sachant en particulier que l'élément (6, 19, 206, 219) de support de moteur est disposé entre le moteur (2) et l'élément porteur (15, 115),
sachant que la transmission (3) repose sur la partie (7, 20, 107, 120) de support de transmission et est reliée à la structure porteuse (5, 105) au moyen de la partie (7, 20, 107, 120) de support de transmission,
sachant que l'élément (6, 19, 206, 219) de support de moteur est un élément en tôle, sachant que l'élément porteur (15, 115) s'étend davantage dans la direction axiale de l'arbre de rotor que dans la direction transversale à la direction axiale de l'arbre de rotor, **caractérisé en ce que** l'élément porteur (15, 115) est un élément en tôle,
et **en ce que** l'élément (6, 19, 206, 219) de support de moteur s'étend davantage dans la direction transversale à la direction axiale de l'arbre de rotor que dans la direction axiale de l'arbre de rotor.

2. Ensemble d'entraînement selon la revendication 1, **caractérisé en ce que** la structure porteuse (105) présente un élément de base (150),
sachant que la structure porteuse (105) repose au moyen de l'élément de base (150), en particulier sur une surface d'appui, en particulier un sol,
sachant que l'élément (6, 19, 206, 219) de support de moteur et l'élément de base (150) sont réalisés de même type, en particulier identiques,
sachant en particulier que l'élément de base (150) s'étend davantage dans la direction transversale à la direction axiale de l'arbre de rotor que dans la direction axiale de l'arbre de rotor.

3. Ensemble d'entraînement selon la revendication 2, **caractérisé en ce que** l'élément (6, 19, 206, 219) de support de moteur et l'élément de base (150) présentent respectivement un premier évidement (32) et un deuxième évidement (33), sachant que le moteur (2) peut être relié à la structure porteuse (5, 105) au moyen d'un élément de fixation (17) dirigé à travers le premier évidement (32), sachant en particulier que le premier évidement (32) est réalisé sous forme de trou oblong, en particulier qui s'étend davantage dans la direction axiale de l'arbre de rotor que dans la direction transversale à la direction axiale de l'arbre de rotor,
sachant que la structure porteuse (105) peut être montée sur une surface d'appui, en particulier un sol, au moyen d'un élément de fixation dirigé à travers le deuxième évidement (33).

4. Ensemble d'entraînement selon au moins une des revendications 2 à 3, **caractérisé en ce que** l'élément porteur (15, 115) et/ou l'élément (6, 19) de support de moteur et/ou l'élément de base (150) est ou sont réalisés sous forme d'élément plié, en particulier sous forme d'élément découpé et plié, en particulier sous forme d'élément angulaire en tôle.

5. Ensemble d'entraînement selon au moins une des revendications précédentes, **caractérisé en ce que** l'élément porteur (15, 115) présente deux parties qui sont disposées l'une par rapport à l'autre sous un angle non infiniment petit, sachant en particulier que cet angle est compris entre 90° et 180°, en particulier entre 135° et 180°, en particulier entre 150° et 170°,
sachant qu'une partie d'arête (21, 121) est disposée entre ces deux parties, laquelle s'étend en totalité à travers l'élément porteur (15, 115) dans la direction axiale de l'arbre de rotor.

6. Ensemble d'entraînement selon au moins une des revendications 2 à 5, **caractérisé en ce que** l'élément (6, 19) de support de moteur et/ou l'élément de base (150) sont reliés en engagement positif et par liaison de matière à l'élément porteur (15, 115), en particulier sont reliés par soudage,
sachant en particulier que l'élément porteur (15, 115) présente au moins une rainure de positionnement (41, 43, 141, 143) pour la liaison avec l'élément (6, 19) de support de moteur ou l'élément de base (150).

7. Ensemble d'entraînement selon au moins une des revendications précédentes, **caractérisé en ce que** l'élément porteur (15, 115) présente une partie porteuse (23, 123), en particulier qui s'étend depuis le moteur (2) vers la transmission (3),
sachant que la partie (7, 20, 107, 120) de support de transmission est disposée sous un angle non infiniment petit par rapport à la partie porteuse (23, 123), sachant en particulier que la partie (7, 20, 107, 120) de support de transmission est disposée sous un angle droit par rapport à la partie porteuse (23, 123),
sachant en particulier que la partie (7, 20, 107, 120) de support de transmission s'étend davantage dans la direction axiale de l'arbre de rotor que dans la direction transversale à la direction axiale de l'arbre de rotor

8. Ensemble d'entraînement selon au moins une des revendications précédentes, **caractérisé en ce que** l'élément porteur (15, 115) présente une partie de fond (24, 124),
sachant que la partie de fond (24, 124) est disposée sous un angle non infiniment petit par rapport à la partie porteuse (23, 123),
sachant en particulier que l'angle entre la partie de fond (24, 124) et la partie porteuse (23, 123) est supérieur ou égal à 90°, en particulier est compris entre 90° et 180°, en particulier entre 90° et 135°, en particulier entre 100° et 120°,
sachant en particulier que la partie de fond (24, 124) est disposée entre deux parties porteuses (23, 123)
sachant en particulier que l'élément porteur (15, 115) présente une section pour l'essentiel en forme de U.

9. Ensemble d'entraînement selon au moins une des revendications précédentes, **caractérisé en ce qu'**un support de couple (11) est relié à la structure porteuse (5) au moyen d'une plaque (16) de support de couple,
sachant que la plaque (16) de support de couple est reliée en engagement positif à l'élément porteur (15), en particulier est reliée par tenon et mortaise, en particulier est reliée en engagement positif et par liaison de matière,
sachant que le support de couple (11) est relié de manière amovible à la plaque (16) de support de couple, en particulier au moyen d'une liaison par vis.

10. Ensemble d'entraînement selon au moins une des revendications précédentes, **caractérisé en ce que** la structure porteuse (5, 105) présente un élément en tôle (14, 114) qui est disposé au moins partiellement entre deux parties (7, 20, 107, 120) de support de transmission,
sachant que l'élément en tôle (14, 114) est réalisé sous forme d'élément plié.

11. Ensemble d'entraînement selon au moins une des revendications précédentes, **caractérisé en ce que** l'élément porteur (15, 115) est réalisé en deux parties, sachant que deux moitiés de l'élément porteur (15, 115) sont reliées entre elles par liaison de matière, en particulier sont reliées par soudage,
sachant en particulier que l'élément porteur (15, 115) présente un joint de soudure linéaire (30), en particulier un joint en I, en particulier qui s'étend dans la direction axiale de l'arbre de rotor,
sachant en particulier que le joint de soudure (30) est interrompu au moyen d'au moins un évidement (31), en particulier d'un évidement (31) qui s'étend davantage dans la direction axiale de l'arbre de rotor que dans la direction transversale à la direction axiale de l'arbre de rotor,
sachant en particulier que les deux moitiés de l'élément porteur (15, 115) sont réalisées symétriquement l'une par rapport à l'autre.

12. Ensemble d'entraînement selon au moins une des revendications précédentes, **caractérisé en ce que** l'ensemble d'entraînement (1, 101) présente un embrayage (4), en particulier un embrayage hydraulique,
sachant que l'embrayage (4) relie entre eux l'arbre de rotor du moteur (2) et un arbre menant de la transmission (3),
sachant que la structure porteuse (5, 105) présente une cuvette (13) qui couvre la région couverte par l'embrayage (4) dans la direction axiale de l'arbre de rotor,
sachant en particulier que la cuvette (13) est reliée par liaison de matière à l'élément porteur (15, 115), en particulier est reliée par soudage,

13. Ensemble d'entraînement selon au moins une des revendications précédentes, **caractérisé en ce que** l'ensemble d'entraînement (1, 101) présente un ventilateur (29),
sachant que le ventilateur (29) est disposé entre l'embrayage (4) et la transmission (3) dans la direction axiale de l'arbre de rotor,
sachant qu'une roue de ventilateur du ventilateur (29) est reliée en solidarité de rotation à l'arbre menant de la transmission (3).

14. Ensemble d'entraînement selon au moins une des revendications précédentes, **caractérisé en ce que** la structure porteuse (5, 105) présente des évidements, en particulier des perçages de transport,
sachant que les évidements sont réalisés sous la forme d'évidements perforés ou découpés,
sachant en particulier que les évidements sont réalisés sous la forme d'oeillets de transport ou d'une manière appropriée pour recevoir les fourchons d'un chariot élévateur à fourche.
